Europäisches Patentamt

European Patent Office

Office européen des brevets

(11) Veröffentlichungsnummer: **0 036 438**
**A2**

(12) **EUROPÄISCHE PATENTANMELDUNG**

(21) Anmeldenummer: **80102119.7**

(22) Anmeldetag: **19.04.80**

(51) Int. Cl.³: **F 24 F 13/14**, F 16 K 1/22

(30) Priorität: **19.03.80 CH 2157/80**

(43) Veröffentlichungstag der Anmeldung: **30.09.81**
**Patentblatt 81/39**

(84) Benannte Vertragsstaaten: **AT BE CH DE FR GB IT LI LU NL SE**

(71) Anmelder: **GEBRÜDER SULZER AKTIENGESELLSCHAFT, Zürcherstrasse 9, CH-8401 Winterthur (CH)**

(72) Erfinder: **Anderegg, John, Oberlangenhard, CH-8486 Langenhard (CH)**

(74) Vertreter: **Dipl.-Ing. H. Marsch Dipl.-Ing. K. Sparing Dipl.-Phys.Dr. W.H. Röhl, Lindemannstrasse 31, D-4000 Düsseldorf (DE)**

(54) **Als Dicht- und/oder Regelklappe dienende Drehklappe für Luftkanäle mit rundem Querschnitt.**

㊷    Die Drehklappe besitzt zwei Klappenflügel (5, 6), die mit ihren Drehachsen (7, 8) in senkrecht zu diesen verlaufenden kreissegmentartigen Einbauten (3, 4) des im Querschnitt kreisförmigen Luftkanals (2) drehbar gelagert sind.

Der neuartige Aufbau der Drehklappe ermöglicht eine symmetrische Durchströmung der teilweise oder ganz geöffneten Drehklappe, ohne daß bei ganz geöffneter Drehklappe eine unzulässig große Verringerung des freien Strömungsquerschnittes in Kauf genommen werden muß.

Gebrüder Sulzer Aktiengesellschaft, Winterthur/Schweiz

**Als Dicht- und/oder Regelklappe dienende Drehklappe für Luftkanäle mit rundem Querschnitt**

Die Erfindung betrifft eine als Dicht- und/oder Regelklappe dienende Drehklappe für Luftkanäle mit rundem Querschnitt.

Bisher sind derartige Drehklappen für runde Kanäle immer einflügelig ausgeführt, wobei eine, durch das Zentrum des Kanalquerschnittes verlaufende Drehachse vorgesehen ist. Hinter einer solchen Klappe entsteht ein stark unsymmetrischer Strömungsverlauf. Es sind daher schon Konstruktionen vorgeschlagen worden, bei denen eine Flügelscheibe und eine Lochscheibe mit entsprechenden Segmentausschnitten relativ zueinander um eine gemeinsame Achse verdreht werden. Selbst bei vollständig geöffneter Klappe beträgt bei diesen Konstruktionen die durch die Klappe erzeugte Querschnittsverengung mehr als 50 %. Irisblendenartige Regelklappen oder solche mit um radiale Achsen drehbare Schaufeln sind sehr aufwendig und erfordern darüberhinaus ausserhalb und längs des Kanalumfangs erheblichen zusätzlichen Platz für die Unterbringung der Irisscheiben
und/oder für die Verstellmechanismen.

Aufgabe der Erfindung ist es, eine Drehklappe zu schaffen,
die eine mindestens weitgehend symmetrische Strömung erlaubt , im offenen Zustand eine möglichst geringe Verkleinerung des Kanalquerschnitts verursacht und im geschlossenen Zustand dicht ist. Weiterhin soll die Klappe
für eine Ausführung als Blechkonstruktion, wie sie in
Luftkanälen im allgemeinen verwendet wird, geeignet und
in der Herstellung möglichst einfach und billig sein.

Diese komplexe Aufgabe wird gemäss der vorliegenden Erfindung dadurch gelöst, dass die geschlossen
tonnenförmige Klappe zweiflügelig ausgebildet ist, wobei
die beiden Klappenflügel senkrecht zu ihren Drehachsen
zwischen kreissegmentartige Einbauten des Luftkanals eingesetzt sind.

Da die beiden Klappenflügel symmetrisch zu einer Radialebene des Kanalquerschnitts aufgebaut sind und sich zu
dieser Ebene gegenläufig symmetrisch öffnen und schliessen,
ist eine sehr weitgehend symmetrische Strömung der Luft
sichergestellt. Weiterhin beansprucht die offene Klappe -
einschliesslich der kreissegmentartigen Einbauten - nur
etwa 10 % des Kanalquerschnitts.

Die resultierende Belastung für den Antrieb der Klappenflügel wird besonders gering, wenn die Drehachse den zugehörigen Klappenflügel derart unterteilt, dass die auf sie
bezogenen Flächenträgheitsmomente der beiden Teilflächen
mindestens annähernd gleich sind; für den Abstand der
Drehachsen von der Längsmittelebene des Luftkanals ergibt
sich daher mit Vorteil der Wert 0,44 mal dem Kanal- oder

0036438

Klappenradius; da in diesem Fall das resultierende Drehmoment an jedem Klappenflügel = Null wird, wird vom Luftdruck auch keine resultierende Kraft auf Klappenflügel, Gestänge und Antrieb ausgeübt.

Ein symmetrisches Oeffnen der Klappenflügel kann erleichtert werden, wenn die beiden Klappenflügel über ein gelenkiges Gestänge miteinander verbunden sind, dessen Gelenkpunkt an jedem Klappenflügel von der zugehörigen Drehachse den gleichen Abstand hat wie der dem anderen Klappenflügel zugewandte Rand. Die Abdichtung der geschlossenen Klappe erfolgt in bekannter Weise durch in Umfangsrichtung der Klappenflügel verlaufende Dichtelemente, die beispielsweise zwischen die aus je zwei Blechen bestehenden Klappenflügel eingeklemmt sind, wobei die beiden Bleche jedes Flügels beispielsweise durch eine Reihe von Punktschweissungen zusammengehalten werden. Dabei kann die Dichtheit an den beiden aufeinander zulaufenden Rändern der Klappenflügel verbessert werden, wenn einer der beiden Klappenflügel an seiner, dem zweiten Flügel zugewandten Begrenzung einen verbreiterten Rand, beispielsweise aus einem T-förmig gebogenen Blech, aufweist, auf dem das Dichtelement des anderen Klappenflügels bei geschlossener Klappe durch Druckkräfte verformt aufliegt.

Im folgenden wird die Erfindung anhand eines Ausführungsbeispieles im Zusammenhang mit der Zeichnung näher erläutert.

Fig. 1  ist in Richtung der Achse des Luftkanals gesehen eine Aufsicht auf die das Gestänge und die Drehachse tragende Seite der neuen Drehklappe;

Fig. 2  ist der Schnitt II - II von Fig. 1 und zeigt die Drehklappe im geschlossenen Zustand, während die

Fig. 3 und 4  in gleicher Darstellung die Klappenflügel in einer teilweise und einer ganz offenen Stellung zeigen.

Fig. 5  gibt in grösserem Massstab die beim Schliessen aufeinander zulaufenden Ränder der beiden Klappenflügel wieder;

Fig. 6  schliesslich zeigt in gleicher Darstellung wie Fig. 5 die beiden Ränder bei geschlossener Klappe.

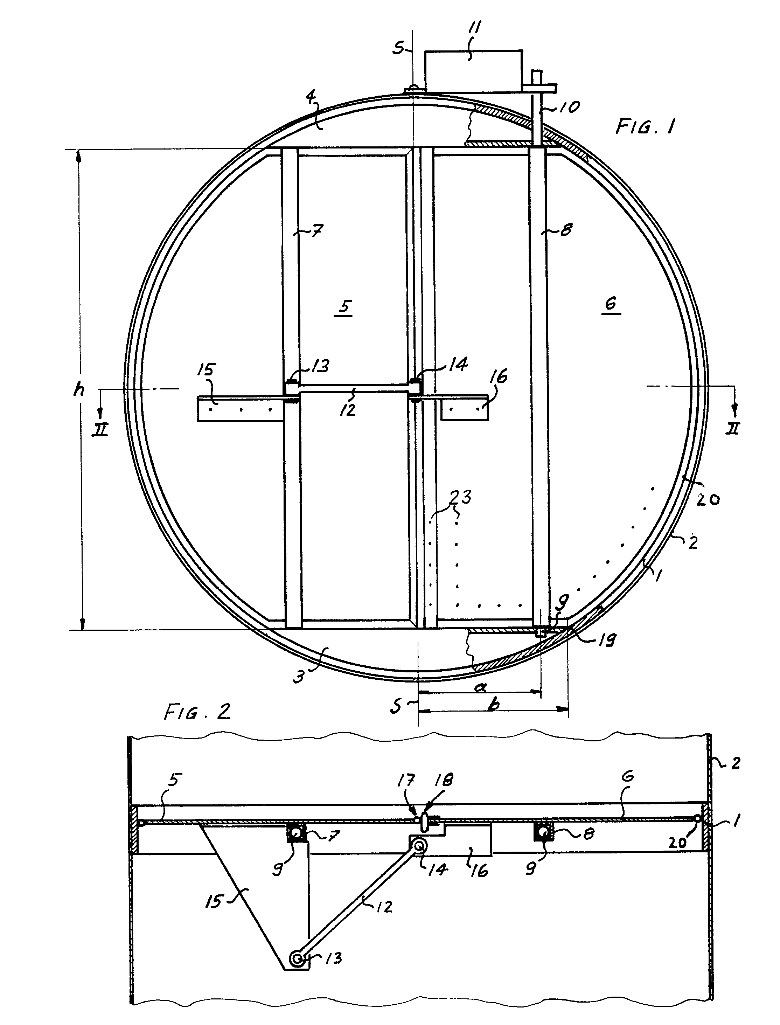

Um die Drehklappe als selbständige, von dem Luftkanal unabhängige Baueinheit ausführen zu können, ist sie von einem Gehäusering 1 umschlossen, der, wie im gezeigten Beispiel, in einen Luftkanal 2 eingesetzt ist, oder an den beidseits Enden eines Luftkanals angesetzt sein können. Im Gehäusering 1 sind oben und unten in Fig. 1 - kreissegmentförmige Einbauten 3 und 4, beispielsweise durch Einschweissen, befestigt, so dass der dazwischen verbleibende Querschnitt des Luftkanals 2 die Form einer Tonne aufweist. In diesem verbleibenden freien Querschnitt ist die erfindungsgemäss zweiflügelige Drehklappe eingesetzt, deren Klappenflügel 5 und 6 an als Vierkantrohre ausgebildeten Drehachsen 7 und 8 befestigt sind; in die Vierkantrohre sind oben und unten je ein Drehzapfen 9 und 10 eingeschlagen, die in den Einbauten 3 und 4 drehbar gelagert sind. Einer der oberen Drehzapfen 10 ist durch den Gehäusering 1 und den Luftkanal 2 hindurch nach aussen verlängert; seine Verlängerung steht mit einem schematisch angedeuteten Antriebsmotor 11 - beispielsweise über ein Zahnrad, in das ein an der Welle des Motors 11 befestigtes Zahnsegment eingreift - in Verbindung.

Die Uebertragung der Oeffnung- und Schliessbewegungen von dem direkt angetriebenen Klappenflügel 6 auf den anderen Klappenflügel 5 erfolgt über ein Gestänge 12, das über Gelenkpunkte 13 bzw. 14 mit den Klappenflügeln 5 und 6 verbunden ist; die Gelenkpunkte 13 und 14 sind auf durch Punktschweissen befestigten Tragblechen 15 bzw. 16 fixiert. Wie bereits erwähnt, haben die Gelenkpunkte 13 bzw. 14 mit Vorteil von den Drehachsen 7 bzw. 8 den gleichen Abstand a, wie die vertikalen beim Schliessen aufeinander zulaufende Ränder 17 bzw. 18 (Fig. 2) der beiden Klappenflügel 5 bzw. 6. Dieser Abstand a, der gleich demjenigen der Drehachsen 7 bzw. 8 von der Längsmittelebene s des Luftkanals 2 ist, beträgt mit Vorteil $0,44 \cdot r$, wobei r der Radius der Drehklappe bzw. der Innenradius des Gehäuseringes 1 ist. Mit dieser Bemessung des Abstandes a für die Lage der Drehachsen 7 bzw. 8 werden die Flächenträgheitsmomente der beiden Teile jedes Klappenflügels 5 bzw. 6 - bezogen auf ihre Drehachsen 7 bzw. 8 - entgegengesetzt gleich gross, heben sich also praktisch auf, so dass in jeder Stellung der Klappe die Belastung für den Antrieb den geringsten Wert annimmt. Bei der vorstehend geschilderten Bemessung für die Abstände a hat es sich als zweckmässig erwiesen, den kreissegmentartigen Ausschnitt für die Einbauten 3 und 4 so zu wählen, dass sein Schnittpunkt 19 mit dem Gehäusering 1 von der Längsmittelebene s den Abstand $b = r/2$ hat, womit sich für die Höhe h der Drehklappe, also für den Abstand zwischen den Einbauten 3 und 4 in Richtung der Drehachsen 7 und 8, ein Wert von $h = \sqrt{3} \cdot r$ ergibt.

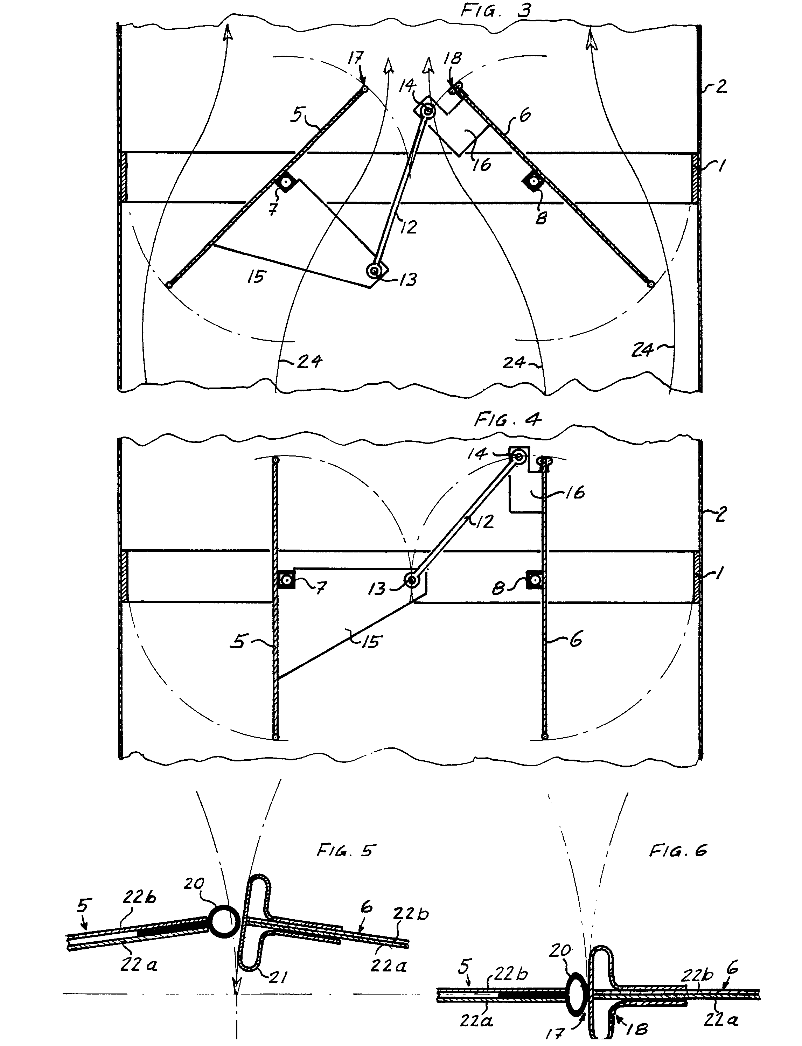

In bekannter Weise ist der äussere Umfang des Klappenflügels 5 von elastischen Dichtelementen 20 eingefasst; die gleichen Dichtelemente 20 trägt der Klappenflügel 6 auf seinem Aussenumfang und gegenüber den Einbauten 3 und 4, während sein Rand 18 von einem T-förmig geformten Blech 21 (Fig. 5 und 6) abgeschlossen ist.

Auf den Querbalken des T-förmigen Randes 18 läugt beim Schliessen der Drehklappe das im unbelasteten Zustand kreisförmige, längs des Randes 17 des Klappenflügels 5 verlaufende Dichtelement 20 auf und verformt sich unter der Wirkung von Scherkräften, beispielsweise in die in Fig. 6 gezeigte Form. Dieser Art der Abdichtung der aufeinander zulaufenden Ränder 17 und 18 der beiden Klappenflügel 5 und 6 hat den Vorteil, dass eine sichere Abdichtung auch dann erreicht wird, wenn die beiden Klappenflügel 5 und 6 in Schliessstellung nicht exakt miteinander fluchten, d. h. einen von 180° geringfügig abweichenden Winkel miteinander bilden.

Wie aus Fig. 5 und 6 zu erkennen ist, bestehen die beiden Klappenflügel 5 und 6 aus zwei Blechen 22a und 22b, die durch Punktschweissungen 23 (Fig. 1) miteinander verschweisst sind, wodurch die handelsüblichen Dichtelemente 20 zwischen den Flächen 22a und 22b eingeklemmt und gehalten werden. Beim Klappenflügel 6 sind längs des Randes 18 die Bleche 22a und 22b ihrerseits zwischen die beiden Seiten des T-förmigen Bleches 21 eingelegt, wobei die Bleche 22 und 21 ebenfalls durch Punktschweissung 23 (Fig. 1) relativ zueinander fixiert sind.

Fig. 3, in der die Drehklappe in teilweise geöffnetem Zustand gezeigt ist, verdeutlicht durch Pfeile 24 den symmetrischen Aufbau der Strömung durch die neue Drehklappe, während die Darstellung der vollständig offenen Drehklappe in Fig. 4 einen Eindruck dafür vermittelt, wie geringfügig die Einbussen an freiem Querschnitt bei der neuen Drehklappe sind.

0036438

Patentansprüche

1. Als Dicht- und/oder Regelklappe dienende Drehklappe für Luftkanäle mit rundem Querschnitt, dadurch g e k e n n - z e i c h n e t , dass die geschlossen tonnenförmige Klappe zweiflügelig ausgebildet ist, wobei die beiden Klappenflügel (5, 6) senkrecht zu ihren Drehachsen (7, 8) zwischen kreissegmentartige Einbauen (3, 4) des Luftkanals (2) eingesetzt sind.

2. Drehklappe nach Anspruch 1, dadurch gekennzeichnet, dass die Drehachsen (7 bzw. 8) den zugehörigen Klappenflügel (5 bzw. 6) derart unterteilen, dass die auf sie bezogenen Flächenträgheitsmomente der beiden Teilflächen mindestens annähernd gleich sind.

3. Drehklappe nach Anspruch 2, dadurch gekennzeichnet, dass der Abstand (a) der Drehachsen (7, 8) von der Längsmittelebene (5) des Luftkanals (2) mindestens annähernd den Wert a = 0,44.r, wobei r der Radius der Drehklappe bzw. des Luftkanals (2) ist.

4. Drehklappe nach Anspruch 1, dadurch gekennzeichnet, dass einer (6) der beiden Klappenflügel (5, 6) an seiner, dem zweiten Flügel (5) zugewandten Begrenzung einen verbreiterten Rand (18) aufweist.

5. Drehklappe nach Anspruch 1, dadurch gekennzeichnet, dass die beiden Klappenflügel (5, 6) über ein gelenkiges Gestänge (12) miteinander verbunden sind, dessen Gelenkpunkt (13 bzw. 14) an jedem Klappenflügel (5 bzw. 6) von der zugehörigen Drehachse (7 bzw. 8) den gleichen Abstand (a) hat wie der dem anderen Klappenflügel zugewandte
Rand (17 bzw. 18) .

0036438

FIG. 1

FIG. 2

FIG. 3

FIG. 4

FIG. 5

FIG. 6